Europäisches Patentamt

European Patent Office

Office européen des brevets

(11) Publication number: **0 068 811**
**B1**

(12) **EUROPEAN PATENT SPECIFICATION**

(45) Date of publication of patent specification: **30.12.86**

(51) Int. Cl.⁴: **H 04 N 9/09**

(21) Application number: **82303279.2**

(22) Date of filing: **23.06.82**

(54) **Digital colour cameras.**

(30) Priority: **26.06.81 JP 99867/81**

(43) Date of publication of application:
**05.01.83 Bulletin 83/01**

(45) Publication of the grant of the patent:
**30.12.86 Bulletin 86/52**

(84) Designated Contracting States:
**AT DE FR GB IT NL**

(56) References cited:
**GB-A-2 051 517**
**GB-A-2 069 288**

(73) Proprietor: **SONY CORPORATION**
**7-35 Kitashinagawa 6-Chome Shinagawa-ku**
**Tokyo 141 (JP)**

(72) Inventor: **Asaida, Takashi**
**2578-1-207 Tsumada**
**Atsugi-shi Kanagawa-ken (JP)**

(74) Representative: **Thomas, Christopher Hugo
et al
D Young & Co 10 Staple Inn
London WC1V 7RD (GB)**

Courier Press, Leamington Spa, England.

# Description

This invention relates to digital colour cameras.

A digital colour camera which digitally processes an output derived from an imager so as to provide a digital colour television signal can be superior to an analog colour camera in signal processing performance, circuit arrangement and reliability. In previously proposed digital cameras, the processing of the output signal is generally at a rate three or four times the colour sub-carrier frequency $f_{sc}$.

A colour signal generally occupies a frequency band of 0 to 4 MHz. However, a person can only discriminate the colour of a pattern having a relatively large dimension, corresponding to the range from 0 to 0.5 MHz, and cannot discriminate the colour of a fine pattern, corresponding to the range from 0.5 to 4 MHz. Accordingly, a colour signal is usually band-width limited to make transmission easier.

In digital processing, the band-width is limited by a digital filter of, for example, a non-recursive or finite impulse response (FIR) type. With such a digital filter, as the ratio $f_c/f_s$ (where $f_c$ is the cut-off frequency, for example, 800 kHz, and $f_s$ is the driving clock frequency or sampling frequency) becomes smaller, its transfer function becomes more complex and hence its order has to be increased, so making the circuit arrangement more complicated. Since $f_s$ is selected to be three or four times the colour sub-carrier frequency $f_{sc}$ (that is, for example, from 10.74 MHz to 14.3 MHz), the ratio $f_c/f_s$ tends to be small, and so the arrangement of the digital filter becomes quite complex.

UK patent specification GB—A—2 051 517 discloses a digital transmission system wherein, at an encoder, Y, U and V component signals are digitized, preferably with a sample frequency of $4f_{sc}$. The U and V component samples are multiplied to produce colour difference samples, and then one in three or one in four of the luminance samples is discarded and replaced by a colour difference sample. At a decoder the missing luminance samples are derived by interpolation.

According to the present invention there is provided a digital colour camera comprising:

means for generating first, second and third digital colour signals, each with a sample rate of $4f_{sc}$ (where $f_{sc}$ represents a colour sub-carrier frequency) from outputs of first, second and third imagers;

means for forming a digital luminance signal from said first, second and third digital colour signals;

means for forming a dot-sequential colour difference signal in which first and second digital colour difference signals appear alternately at every $1/4f_{sc}$ from said first, second and third digital colour signals; and

means for passing said dot sequential digital colour difference signal through digital filter means so as to limit the band widths of said first and second digital colour difference signals.

According to the present invention there is also provided a digital colour camera comprising:

means for generating first, second and third digital colour signals, each with a sample rate of $4f_{sc}$ (where $f_{sc}$ represents a colour sub-carrier frequency) from outputs of imagers;

means for forming a digital luminance signal from said first, second and third digital colour signals;

means for forming first and second digital colour difference signals from said first, second and third digital colour signals;

pre-filter means for limiting the band widths of said first and second digital colour difference signals;

means for generating a dot-sequential digital colour difference signal where said first and second digital colour difference signals appear at every $1/4f_{sc}$ from said first and second digital colour difference signals whose band widths have been limited; and

means for passing said dot-sequential digital colour difference signal through digital filter means so as to limit the band widths of said first and second digital colour difference signals.

According to the present invention there is also provided a digital colour camera comprising:

means for generating first, second and third digital colour signals, each with a sample rate of $4f_{sc}$ (where $f_{sc}$ represents a colour sub-carrier frequency) from outputs of imagers;

means for forming a digital luminance signal and first and second digital colour difference signals from said first, second and third digital colour signals;

means for generating a dot-sequential digital colour difference signal in which said first and second digital colour difference signals appear alternately every $1/4f_{sc}$;

first digital filter means supplied with said dot-sequential digital colour difference signal so as to limit the band width of said first digital colour difference signal; and

second digital filter means having a narrower pass band compared with said first digital filter and supplied with said dot-sequential digital colour difference signal whose band is limited already so as to limit the band width of said second colour difference signal.

The invention will now be described by way of example with reference to the accompanying drawings, throughout which like references designate like elements, and in which:

Figure 1 is a block diagram of a first embodiment of digital colour camera according to the invention;

Figures 2A to 2E and Figures 3A to 3I are waveform diagrams for explaining the camera of Figure 1;

Figure 4 is a circuit diagram of a digital filter;

Figures 5 and 8 are block diagrams of second and third embodiments of digital colour camera according to the invention;

Figures 6A and 6B are diagrams showing a relation between a spatial sampling phase of a solid state imager and an output spectrum thereof;

Figure 7 is a block diagram of an interpolator; and

Figures 9A to 9H and Figures 10A to 10H are waveform diagrams for explaining the camera of Figure 8.

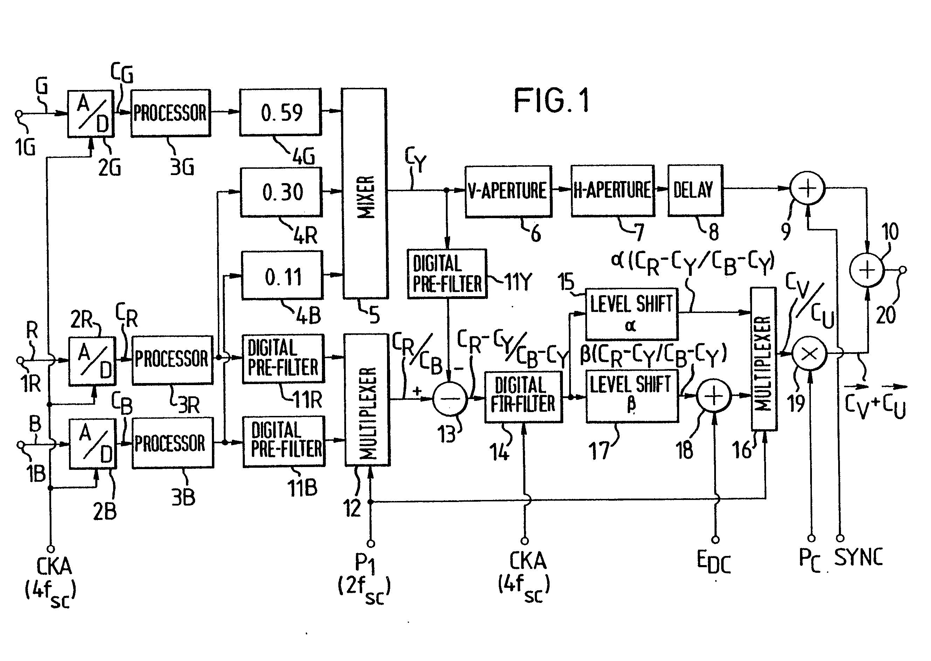

Referring to Figure 1, in the first embodiment green, red and blue signals G, R and B derived, for example, by a three-tube type colour camera or a three-plate type charge coupled device colour camera are digitally processed so as to produce a colour television signal in which a colour signal is subjected to so-called U-V modulation.

The green, red and blue signals G, R and B are respectively supplied to input terminals 1G, 1R and 1B. The green, red and blue signals G, R and B supplied to the input terminals 1G, 1R and 1B are respectively supplied to analog-to-digital (A/D) converters 2G, 2R and 2B. The A/D converters 2G, 2R and 2B are supplied with a clock signal CKA with a frequency $4f_{sc}$, whereby the respective colour signals G, R and B are converted, at a sampling rate of $4f_{sc}$, to digital colour signals $C_G$, $C_R$ and $C_B$, each having eight bits per sample.

The digital colour signals $C_G$, $C_R$ and $C_B$ are respectively supplied to processors 3F, 3R and 3B for signal treatments such as gamma correction, white clip and pedestal clamp.

The digital colour signals $C_G$, $C_R$ and $C_B$ thus processed are respectively supplied through level shifters 4G, 4R and 4B, which serve to reduce these digital colour signals $C_G$, $C_R$ and $C_B$ in level to 0.59, 0.30 and 0.11 respectively, to an adder or mixer 5. In the mixer 5, the digital colour signals $C_G$, $C_R$ and $C_B$ respectively reduced in level are added to one another so as to generate a digital luminance signal $C_Y$. The digital luminance signal $C_Y$ is expressed by:

$$C_Y = 0.59\ C_G + 0.30\ C_R + 0.11\ C_B \quad (1)$$

The digital luminance signal $C_Y$ formed by the mixer 5 is supplied through vertical and horizontal aperture correctors 6 and 7 and a delay circuit 8 for matching the digital luminance signal $C_Y$ in phase with a colour signal, which will be discussed later, to one input of an adder 9. To the other input of the adder 9 is supplied a digital vertical and horizontal synchronizing signal SYNC which is generated from a synchronizing signal generator (not shown), so that the digital synchronizing signal SYNC is added to the digital luminance signal $C_Y$. The digital luminance signal $C_Y$ produced from the adder 9 and having had added to it the digital synchronizing signal SYNC is supplied to one input side of an adder 10.

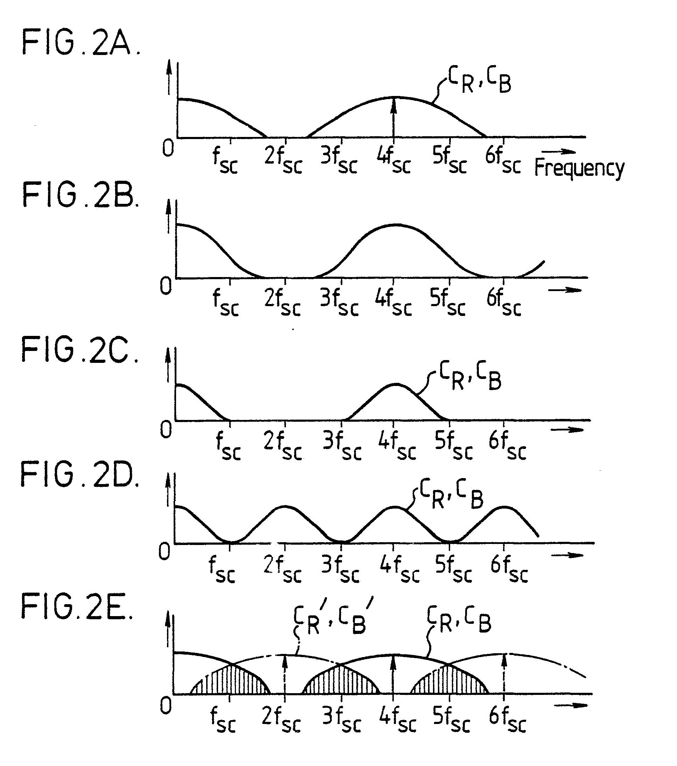

Also, the digital red and blue colour signals $C_R$ and $C_B$ derived from the processors 3R and 3B are respectively supplied to digital pre-filters 11R and 11B. Each of the digital pre-filters 11R and 11B has a filter characteristic including a pass band extending substantially to $f_{sc}$ as shown in Figure 2B. Each of the digital red and blue colour signals $C_R$ and $C_B$ has a band width of about 4 MHz, and each has a frequency spectrum as shown in Figure 2A. Accordingly, the digital pre-filters 11R and 11B derive digital red and blue colour signals $C_R$ and $C_B$ with band widths respectively restricted to substantially $f_{sc}$ as shown in Figure 2C. The arrow at $4f_{sc}$ in Figure 2A indicates a central carrier.

The reason for restricting the band width of each of the digital red and blue colour signals $C_R$ and $C_B$ substantially to $f_{sc}$ in the digital prefilters 11R and 11B is that when the digital red and blue colour signals $C_R$ and $C_B$ are used to form a dot-sequential colour signal $C_R/C_B$ which alternates each $1/4f_{sc}$ aliasing noise can be avoided.

Each of the digital pre-filters 11R and 11B is formed as a digital filter whose drive clock frequency $f_s$ is $4f_{sc}$ (14.3 MHz). Because the cut-off frequency $f_c$ thereof is $f_{sc}$ and hence the ratio of the normalized cut-off frequency that is, $f_c/f_s$ is quite large ($f_{sc}/3f_{sc}=1/3$), the digital pre-filters 11R and 11B are relatively easy to construct.

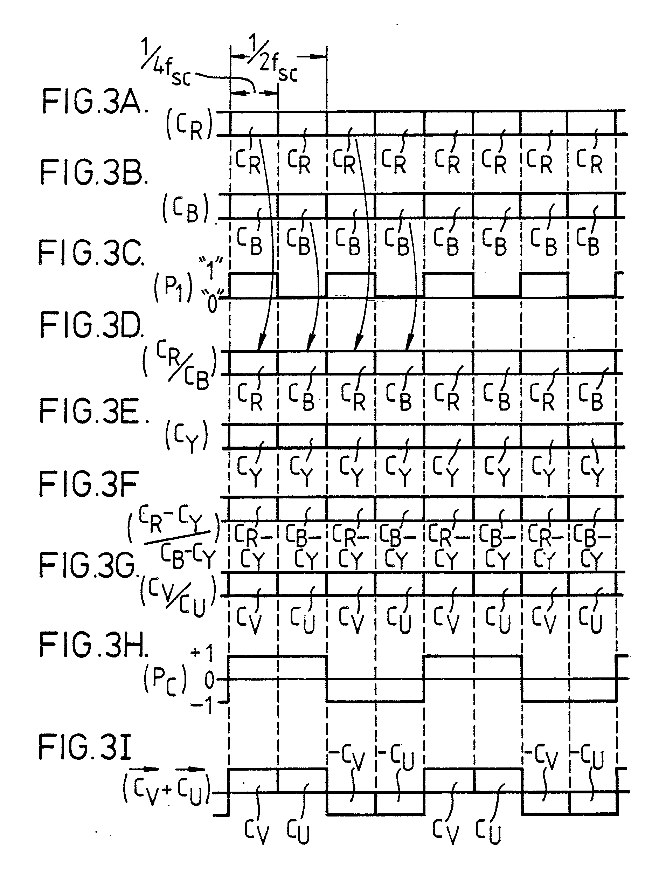

The digital red and blue colour signals $C_R$ and $C_B$ produced from the digital pre-filters 11R and 11B whose band widths are restricted as shown in Figures 3A and 3B are supplied to a multiplexer 12. The multiplexer 12 is supplied with a control signal formed by a pulse signal $P_1$, as illustrated in Figure 3C, which is synchronized with a clock signal CKA and which has an on duty ratio of 50%. When the pulse signal $P_1$ becomes, for example, high level "1", the digital red colour signal $C_R$ is selected by the multiplexer 12, while when it becomes low level "0", the digital blue colour signal $C_B$ is selected thereby. Therefore, the multiplexer 12 derives the dot-sequential digital colour signal $C_R/C_B$ as shown in Figure 3D where the digital red and blue colour signals $C_R$ and $C_B$ are alternately extracted therefrom at every $1/4f_{sc}$.

In this case, in the dot-sequential digital colour signal $C_R/C_B$, each of the digital red and blue colour signals $C_R$ and $C_B$ becomes a series of signals appearing at intervals of $1/2f_{sc}$. But, as described above, in the digital pre-filters 11R and 11B, the band widths of these digital red and blue colour signals $C_R$ and $C_B$ are limited to $f_{sc}$, so that the frequency spectrum at this time is as indicated in Figures 2D and hence no aliasing noise occurs. In other words, when the digital red and blue colour signals $C_R$ and $C_B$ are not passed through the digital pre-filters 11R and 11B, as shown in Figure 2E, carrier side band signal components $C_R'$ and $C_B'$ due to the switching operation of the digital red and blue colour signals $C_R$ and $C_B$ by the multiplexer 12 are superimposed upon the frequency components of the original digital red and blue colour signals $C_R$ and $C_B$ (Figure 2A) thus resulting in the aliasing noise (shown by hatching in Figure 2E).

The dot-sequential digital colour signal $C_R/C_B$ is supplied to one input of a subtractor 13 which generates a colour difference signal. The subtractor 13 is supplied at its other input with a digital luminance signal $C_Y$ as shown in Figure 3E and supplied from the mixer 5 by way of a digital pre-filter 11Y.

The digital pre-filter 11Y is arranged the same as the digital pre-filters 11R and 11B and has a filter characteristic to limit the band width substantially to $f_{sc}$. Accordingly, in this digital pre-filter 11Y, the band width of the digital luminance signal $C_Y$ is restricted substantially to $f_{sc}$.

In the subtractor 13, the digital luminance signal $C_Y$ is subtracted from the dot-sequential digital colour signal $C_R/C_B$. Thus, the subtractor 13 produces a dot-sequential digital colour difference signal $C_R-C_Y/C_B-C_Y$ as shown in Figure 3F.

The dot-sequential digital colour difference signal $C_R-C_Y/C_B-C_Y$ is supplied to a digital filter 14 for restricting the band of this dot-sequential colour difference signal to, for example, 800 kHz. For the digital filter 14, there is generally utilized a digital filter with a symmetrical impulse response, for example, a finite impulse response (FIR) type digital filter in order to achieve stability in processing and to make a group delay characteristic uniform.

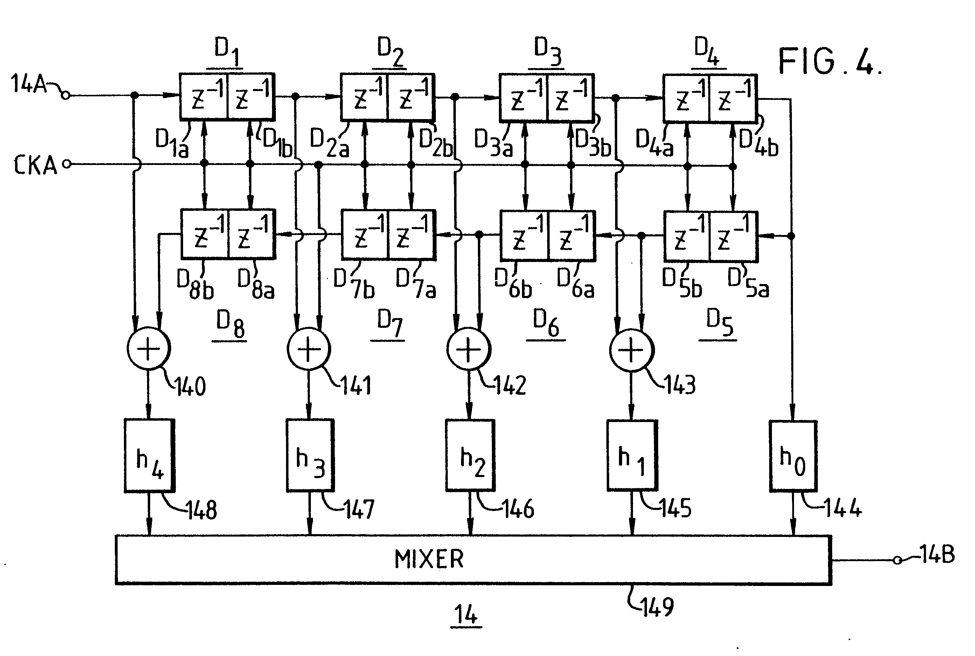

Figure 4 shows one example of such an FIR type digital filter 14, in which characters $D_{1a}$, $D_{1b}$, $D_{2a}$, $D_{2b}$, ..., $D_{8a}$, $D_{8b}$ represent respective operators which may be D flip-flops. Each of the operators $D_{1a}$, $D_{1b}$, $D_{2a}$, $D_{2b}$, ..., $D_{8a}$, $D_{8b}$ is operated with the clock signal CKA of frequency $4f_{sc}$ to permit the delay of $1/4f_{sc}$ to be produced. Since the dot-sequential colour difference signal $C_R-C_Y/C_B-C_Y$ supplied to the digital filter 14 is a signal in which the digital red and blue colour signals $C_R-C_Y$ and $C_B-C_Y$ are alternately extracted at every $1/4f_{sc}$ as shown in Figure 3F, the operators $D_{1a}$ and $D_{1b}$, $D_{2a}$ and $D_{2b}$, ..., and $D_{8a}$ and $D_{8b}$ are respectively connected in series so as to make new operators $D_1$, $D_2$, ... and $D_8$ each with a delay of $1/2f_{sc}$. The FIR type digital filter 14 is constructed using these new operators $D_1$, $D_2$, ... $D_8$.

Because this digital filter 14 uses the new operators $D_1$, $D_2$, ... $D_8$, each having the delay $1/2f_{sc}$, it is as if the digital filter 14 had a driving clock frequency of substantially $2f_{sc}$. Therefore, it is designed to have a cut-off frequency of substantially 800 kHz. Speaking more precisely, it is designed with a normalized frequency of $2f_{sc}$ if a transfer function is taken as $H(Z^{-2})$.

The digital filter 14 also comprises adders 140, 141, 142 and 143, multipliers 144, 145, ... and 148 in which impulse response coefficients $h_0$, $h_1$, ... $h_4$ are multiplied, and an adder or mixer 149 for adding the outputs of the multipliers 144, 145, ... and 148 with one another.

Now, let us consider a case that the dot-sequential digital colour difference signal $C_R-C_Y/C_B-C_Y$ as shown in Figure 3F is supplied to an input terminal 14A of the digital filter 14. Since each of the operators $D_1$, $D_2$, ... and $D_8$ has the delay of $1/2f_{sc}$ when the input terminal 14A is supplied with the digital red colour difference signal $C_R-C_Y$, each of the outputs from the operators $D_1$, $D_2$, ... and $D_7$ equals the digital red colour difference signal $C_R-C_Y$ only. Thus, at this time, from an output terminal 14B of the mixer 149, there is supplied the digital red colour difference signal $C_R-C_Y$ whose band is restricted to substantially 800 kHz. Similarly, when the input terminal 14A is supplied with the digital blue colour difference signal $C_B-C_Y$, from the output terminal 14B, there is supplied the digital blue colour difference signal $C_B-C_Y$ whose band is limited to substantially 800 kHz. Thus, the digital filter 14 produces the dot-sequential digital colour difference signal $C_R-C_Y/C_B-C_Y$, the band of which is restricted to substantially 800 kHz.

Turning back to Figure 1, the dot-sequential digital colour difference signal $C_R-C_Y/C_B-C_Y$ which is produced from the digital filter 14 and of which the band is restricted is supplied to a level shifter 15. The level shifter 15 reduces the level to $\alpha$ times, for example 1/1.14 times that of the original level, and supplies the signal to a multiplexer 16. Also, the dot sequential digital colour difference signal $C_R-C_Y/C_B-C_Y$ is supplied to a level shifter 17, where it is reduced in level to $\beta$ times, for example, 1/2.03 times that of the original level, and then supplied to one input side of an adder 18.

The adder 18 is supplied at its other input with a DC signal $E_{DC}$ having a predetermined level at a predetermined position of a back porch of a horizontal synchronizing signal added to the digital luminance signal $C_Y$. During the period during which this DC signal $E_{DC}$ is supplied to the adder 18, the outputs of the level shifters 15 and 17 are at the state that no signal is present. Also, the DC signal $E_{DC}$ which will be inserted so as to form a digital burst signal is inserted so as to extract $\beta (C_R-C_Y)$, because the phase of the burst signal in the NTSC signal exists on a $C_B-C_Y$ axis. Therefore, the adder 18 produces a dot-sequential digital colour difference signal $\beta (C_R-C_Y/C_B-C_Y)$ to which the DC signal $E_{DC}$ has been added, and which is then supplied to the multiplexer 16.

The multiplexer 16 is supplied with the pulse signal $P_1$ (Figure 3C). When the pulse signal $P_1$ is at the high level "1", the multiplexer 16 extracts therefrom the dot-sequential digital colour difference signal $\alpha (C_R-C_Y/C_B-C_Y)$ supplied from the lever shifter 15. That is, at this time, the signal $\alpha (C_R-C_Y)$ (hereinafter referred to as signal $C_V$) is extracted therefrom. Whereas, when the pulse signal $P_1$ is at the low level "0", the multiplexer 16 extracts therefrom the dot-sequential digital colour difference signal $\beta (C_R-C_Y/C_B-C_Y)$ supplied from the adder 18. That is, at this time, the signal $\beta (C_B-C_Y)$ (hereinafter referred to as signal $C_U$) is extracted therefrom. Accordingly, the multiplexer 16 produces a dot-sequential digital colour difference signal $C_V/C_U$ including the signals $C_V$ and $C_U$ alternately extracted at every $1/4f_{sc}$ as illustrated in Figure 3G.

In this case, in the adder 18, the DC signal $E_{DC}$ added to the digital luminance signal $C_Y$ for forming the colour burst signal is converted to a pulse signal with a frequency $2f_{sc}$. This is because a zero level and an $E_{DC}$ level of the DC signal $E_{DC}$

are switched to each other with the frequency of $2f_{sc}$.

Also, the dot-sequential digital colour difference signal $C_V/C_U$ is supplied to a modulation multiplier 19. The multiplier 19 is supplied with a carrier $P_C$ with a frequency of $f_{sc}$ of which the first half is representative of +1 and of which the second half is representative of −1 as shown in Figure 3H, so as to carry out the multiplication. Thus, the multiplier 19 produces a digital colour difference signal $C_V+C_U$ which is orthogonally two-phase-modulated as shown in Figure 3I.

In this case, the pulse signal whose frequency is made $2f_{sc}$ in the multiplexer 16 is multiplied with the carrier $P_C$ in the multiplier 19 and thereby arranged as a colour burst signal with a frequency $f_{sc}$.

Also, the digital modulated colour difference signal $C_V+C_U$ produced from the multiplier 19 is supplied to the other input of the adder 10. In the adder 10, the digital modulated colour difference signal $C_V+C_U$ is added to the digital luminance signal $C_Y$ to allow a digital television signal to be formed. Thus, the digital television signal is produced at an output terminal 20 at the output side of the adder 10.

As described above, in the embodiment, the digital red and blue colour signals $C_R$ and $C_B$ are passed through the digital chroma multiplexer 12 so as to be converted to the dot-sequential digital colour difference signal $C_R/C_B$ and then supplied to the digital filter 14 for the band limiting. Therefore, it is not necessary to provide independent digital filters for the respective digital colour signals, thus simplifying the circuitry.

In addition, since the dot-sequential digital colour difference signal is provided, taking the transfer function of the digital filter as $H(Z^{-2})$, it is possible to design the digital filter with the normalized frequency $2f_{sc}$. In other words, it is possible to design the digital filter with the driving clock frequency $2f_{sc}$. Therefore, since the value of $f_c/f_s$ becomes larger than in previously proposed arrangements, without making the order number so large, it is possible to construct the digital filter simply. Thus, in the above embodiment, the normalized cut-off frequency ratio $f_c/f_s$ need not be $f_c/4f_{sc}=800$ kHz/14.3 MHz, but can be made as $f_c/2f_{sc}=800$ kHz/7.2 MHz, so design of the digital FIR filter is easier.

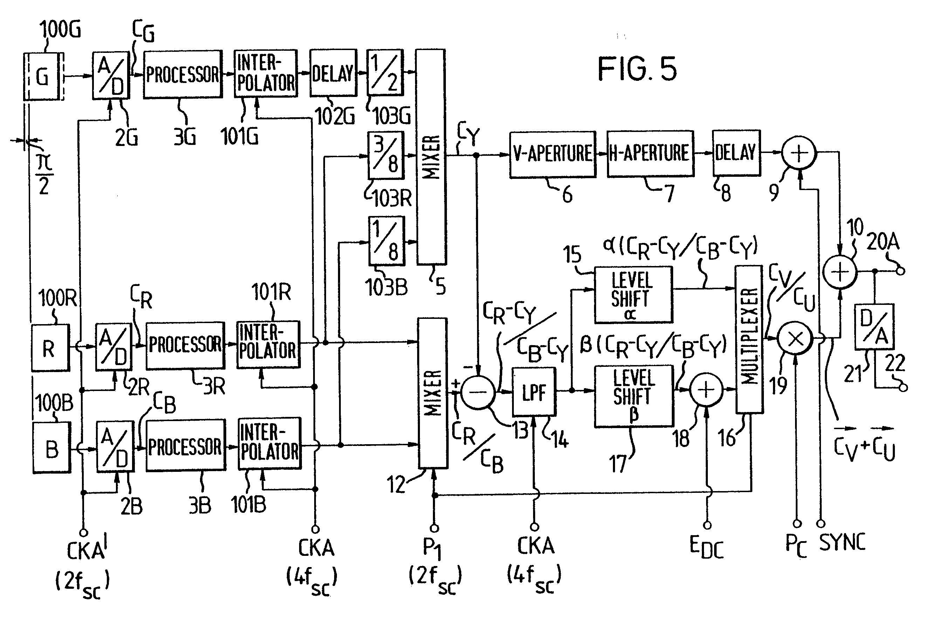

Referring now to Figure 5, in the second embodiment the green, red and blue colour signals G, R and B supplied by the three-plate type CCD colour camera are digitally processed so as to obtain the colour television signal which the colour signal is subjected to so-called U-V modulation.

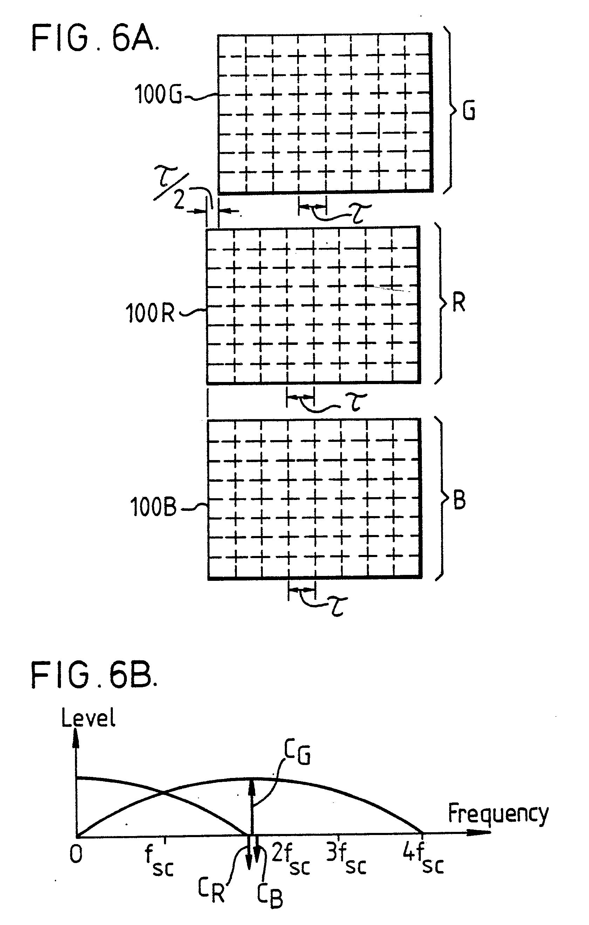

In Figure 5, reference characters 100G, 100R and 100B denote CCDs, each comprising a solid-state imager. The CCDs 100G, 100R and 100B respectively produce, green, red and blue signals G, R and B, each with a sampling frequency of $2f_{sc}$. As shown in Figure 6A, the CCDs 100G, 100R and 100B are arranged such that the CCD 100G deviates in spatial sampling phase from the CCDs 100R and 100B by $\tau/2$ (where $\tau$ is the pitch of the picture elements in the horizontal direction). This deviation is implemented to prevent aliasing noise from occurring.

The green, red and blue colour signals G, R and B generated from the CCDs 100G, 100R and 100B are supplied to the A/D converters 2G, 2R and 2B. The A/D converters 2G, 2R and 2B are respectively supplied with a clock signal CKA' with a frequency of $2f_{sc}$, whereby the respective green, red and blue colour signals G, R and B are converted to the digital colour signals $C_G$, $C_R$ and $C_B$ of, for example eight bits per sample with the processing rate of $2f_{sc}$.

Then, the digital colour signals $C_G$, $C_R$ and $C_B$ are respectively supplied to the processors 3G, 3R and 3B, in which they are processed and thereafter, supplied to interpolators 101G, 101R and 101B so as to be converted in rate to the signal series of $4f_{sc}$, respectively. By way of example, the interpolator 101G is expressed by a transfer function given by:

$$H(Z)=1+Z^{-1}$$

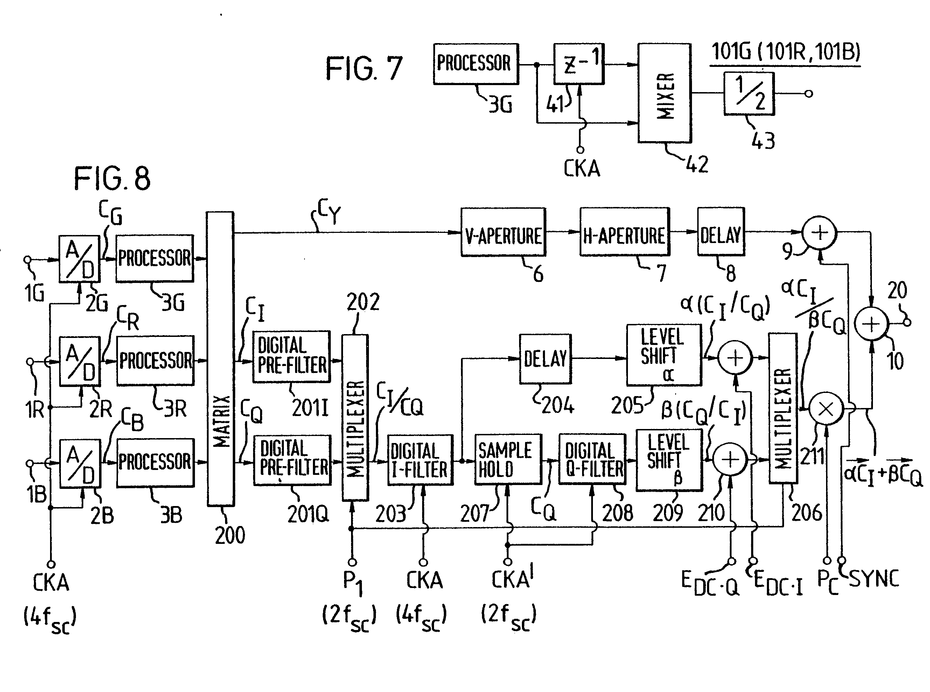

and is formed as shown in Figure 7. An operator 41 comprising a D flip-flop is driven by the clock signal CKA of frequency $4f_{sc}$ and the operator 41 has a delay of $1/4f_{sc}$. After the output from the processor 3G has been added in a mixer 42 to the output which is supplied from the processor 3G and passed through the operator 41, this added output is supplied to and lowered in level to 1/2 by a level shifter 43. Since one sample is newly inserted into two samples at the period $1/4f_{sc}$ by this signal processing operation, the processing rate is converted from $2f_{sc}$ to $4f_{sc}$. If the interpolator 101G is constructed in such a manner that the transfer function $H(z)$ is expressed by:

$$H(z)=1+\frac{1}{2}(z+z^{-1})$$

the processing rate is converted from $2f_{sc}$ to $4f_{sc}$ similarly. The other interpolators 101R and 101B are similar and will not be described in detail.

The digital green colour signal $C_G$ converted in rate to the signal of the $4f_{sc}$ series in the interpolator 101G is supplied to a delay circuit 102G which has a delay time of $1/4f_{sc}$. This delay time $1/4f_{sc}$ is used to correct the phase differences between the green colour signal G and red and blue colour signals R and B due to the deviation of the spatial sampling phase by $\tau/2$ between the CCD 100G and the CCDs 100R and 100B. In other words, this is because the drive clock frequency per picture element of the CCD is $2f_{sc}$ and in this case, the delay of 1/2 picture element has to be taken into consideration. The output of the delay circuit 102G is supplied to and lowered in level to 1/2 by a level shifter 103G, and is then supplied to the mixer 5.

Also, the digital red and blue signals $C_R$ and $C_B$ produced from the interpolators 101R and 101B are supplied to and lowered in level to 3/8 and 1/8 by level shifters 103R and 103B, respectively and then supplied to the mixer 5.

In the mixer 5, the digital green, red and blue signals $C_G$, $C_R$ and $C_B$ whose levels are respectively lowered to 1/2, 3/8 and 1/8 are added to one another to permit the digital luminance signal $C_Y$ to be formed, which is expressed as follows:

$$C_Y = 1/2\ C_G + 3/8\ C_R + 1/8\ C_B \qquad (2)$$

Accordingly, since the level 1/2 of the digital green colour signal $C_G$ and the added level 3/8+1/8 of the digital red and blue colour signals $C_R$ and $C_B$ are selected in one to one relation and also since each of the spatial sampling phases between the CCD 100G and the CCDs 100R and 100B is deviated by $\tau/2$, aliasing noise is prevented from occurring. This method is called spatial off-setting of picture elements.

Such aliasing noise cancellation is discussed in detail in U.S. Patent No. 4,069,501, reissued as No 30,800, and can easily be understood with reference to Figure 6B. That is, it can be regarded that the spectrum diagram of Figure 6B represents the output of the mixer 5. In this spectrum diagram, carriers $C_G$, $C_B$ and $C_R$ of the colour signals produced by the driving clock are controlled in level as described before and in addition, the phase relation therebetween indicated by the vector representation of Figure 6B. Thus, when a white object is picked up, its carrier is balanced and hence its sampling side band is balanced.

Also, the digital red and blue signals $C_R$ and $C_B$ derived from the interpolators 101R and 101B are supplied to the multiplexer 12. The multiplexer 12 produces a dot-sequential digital colour signal $C_R/C_B$ by extracting the digital red and blue signals $C_R$ and $C_B$ at every $1/4f_{sc}$. In this case, each colour difference signal, for example $C_R - C_Y$, is a signal series occurring every $1/2f_{sc}$.

The dot-sequential digital colour signal $C_R/C_B$ is supplied to one input of the subtractor 13 which serves to generate the colour difference signals, while the subtractor 13 is supplied at its other input with the digital luminance signal $C_Y$ supplied by the mixer 5. In this subtractor 13, the digital luminance signal $C_Y$ is subtracted from the dot-sequential digital colour signal $C_R/C_B$, so the dot-sequential digital colour difference signal $C_R - C_Y/C_B - C_Y$ is derived.

The colour difference signal $C_R - C_Y/C_B - C_Y$ is supplied to the digital filter 14 for limiting the band of the colour difference signal, for example, to 800 kHz.

Apart from this the embodiment of Figure 5 is similar to that of the embodiment of Figure 1. The function of the embodiment of Figure 5 is similar to that of the embodiment of Figure 1. In addition, with the embodiment of Figure 5, since the aliasing noise is avoided by the spatial off-setting technique, the digital pre-filters 11R and 11B of Figure 1 do not have to be provided. Also, the input of the digital low-pass filter becomes the rate series of $2f_{sc}$ and hence $fc/2f_{sc} = 800$ kHz/7.2 MHz is established. This ratio is sufficiently large for the digital filter to be constructed quite simply.

Figure 8 shows a case where the green, red and blue colour signals G, R and B produced from the three-tube type colour camera and the three-plate type CCD colour camera are digitally processed so as to provide a colour television signal in which the colour signals are subjected to so-called I-Q modulation.

The digital colour signals $C_G$, $C_R$ and $C_B$ treated by the processing operation are all supplied to a matrix circuit 200. The matrix circuit 200 performs calculations as given by:

$$C_Y = 0.59\ C_G + 0.3\ C_R + 0.11\ C_B \qquad (3)$$

$$C_I = -0.28\ C_G + 0.60\ C_R - 0.32\ C_B \qquad (4)$$

$$C_Q = -0.52\ C_G + 0.21\ C_R + 0.31\ C_B \qquad (5)$$

so that the digital luminance signal $C_Y$ and the digital I and Q signals $C_I$ and $C_Q$ are formed.

The digital luminance signal $C_Y$ is subjected to aperture correction, phase correction and the addition of the synchronizing signal SYNC in the manner of the embodiment of Figure 1.

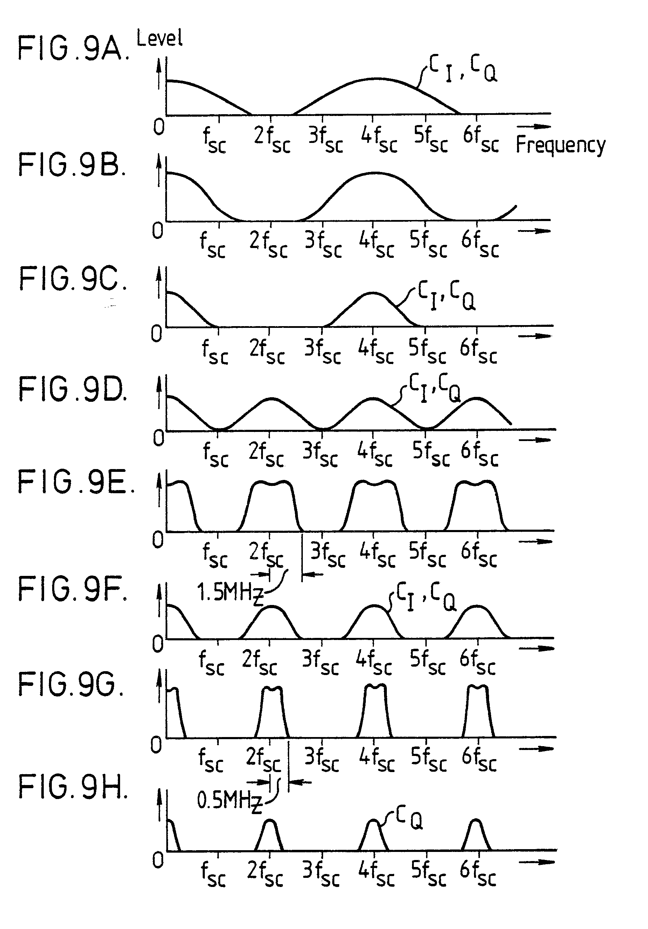

The digital I and Q signals $C_I$ and $C_Q$ are respectively supplied to digital pre-filters 201I and 201Q. Each of the digital pre-filters 201I and 201Q has a filter characteristic as shown in Figure 9B, that is, it restricts the band width to substantially $f_{sc}$. In this case, each of the band widths of the digital I and Q signals $C_I$ and $C_Q$ is substantially 4 MHz and hence their frequency spectra are indicated as shown in Figure 9A. Therefore, the digital pre-filters 201I and 201Q produce the digital I and Q signals $C_I$ and $C_Q$ whose band widths are respectively limited to approximately $f_{sc}$ as shown in Figure 9C.

The reason why in these digital pre-filters 201I and 201Q the band widths of the digital I and Q signals $C_I$ and $C_Q$ are limited to $f_{sc}$ is that when they are converted to a dot-sequential digital colour signal $C_I/C_Q$ in place of the sequential digital I and Q signals $C_I$ and $C_Q$ at every $1/4f_{sc}$, it is necessary to avoid the occurrence of aliasing noise.

In this case, the digital pre-filters 201I and 201Q are formed as digital filters and their driving clock frequency $f_s$ is $4f_{sc}$. But, since the cut-off frequency $f_c$ is $f_{sc}$ and hence the ratio $f_c/f_s$ is as large as 1/4, as compared with other digital filter for restricting a band width of a colour signal, which will be mentioned later, for example, to 0.5 MHz and 1.5 MHz, it is possible to construct them more easily.

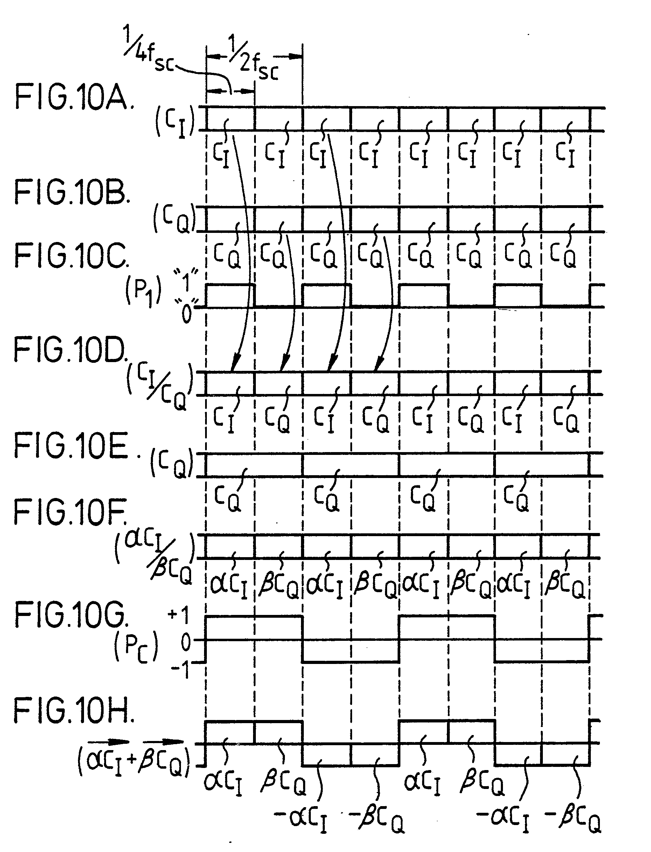

The digital I and Q signals $C_I$ and $C_Q$ from the digital pre-filters 201I and 201Q and band width limited as shown in Figures 10A and 10B, are supplied to a multiplexer 202. The multiplexer 202 is supplied as a control signal with the pulse

signal $P_1$ synchronized with the clock signal CKA and whose on-duty ratio is 50% as shown in Figure 10C. When this pulse signal $P_1$ is at, for example, high level "1", the digital I signal $C_I$ is extracted through the multiplexer 202, and when it is at low level "0", the digital Q signal $C_Q$ is derived therefrom. Accordingly, the multiplexer 202 produces a dot-sequential digital colour difference signal $C_I/C_Q$ by alternately extracting therethrough the digital I and Q signals $C_I$ and $C_Q$ at every $1/4f_{sc}$ as shown in Figure 10D.

In this case, in this dot-sequential digital colour difference signal $C_I/C_Q$, each of the digital I and Q signals $C_I$ and $C_Q$ becomes the frequency series of $2f_{sc}$. However, as described above, since the band widths of these digital I and Q signals $C_I$ and $C_Q$ are limited to $f_{sc}$ in the digital pre-filters 201I and 201Q, the frequency spectrum at this time becomes as shown in Figure 9D, so that no aliasing noise is caused.

This dot-sequential digital colour difference signal $C_I/C_Q$ is supplied to a digital filter 203 having a frequency characteristic which limits the band width of such dot-sequential digital colour difference signal $C_I/C_Q$ for example, to 1.5 MHz (band limit width of the digital I signal $C_I$) as shown in Figure 9E. For this digital filter 203 there is utilized a digital filter, for example, the FIR type like the digital filter 14 used in the embodiment of Figure 1. In this case, since the digital filter 203 also comprises new operators, each with a delay of $1/2f_{sc}$, the digital filter 203 may have a drive clock frequency of substantially $2f_{sc}$. Thus, the digital filter 203 is designed in such a manner as to have a cut-off frequency of substantially 1.5 MHz. Also, in this case, the ratio of the normalized cut-off frequency is expressed as $f_c/f_s=1.5$ MHz/ 7.2 MHz, and it is relatively large. Therefore, this digital filter 203 can be designed easily.

The dot-sequential digital colour difference signal $C_I/C_Q$ produced from the above digital filter 203 and of which the band width is limited as shown in Figure 9F is supplied through a delay circuit 204 and a level shiter 205 to a multiplexer 206. The delay of the delay circuit 204 is selected as a value needed for coincidence with the dot-sequential digital colour difference signal $C_I/C_Q$ passing through another route, which will be mentioned later. Also, the level shifter 205 adjusts the level of the above dot-sequential digital colour difference signal $C_I/C_Q$ to compensate for loss in transmission.

The dot-sequential digital colour difference signal $C_I/C_Q$ supplied by the digital filter 203 is supplied to a sample-and-hold circuit 207. The sample-and-hold circuit 207 is supplied with the clock signal CKA' with the frequency $2f_{sc}$, whereby of the dot-sequential digital colour difference signals $C_I/C_Q$, only the digital Q signal $C_Q$ is sampled and then held at the period of $1/2f_{sc}$. Accordingly, the sample-and-hold circuit 207 provides a signal $C_Q$ as shown in Figure 10E.

The signal $C_Q$ is supplied to a digital filter 208 whose frequency characteristic is shown in Figure 9G and which restricts the band width of the signal $C_Q$ to, for example, 0.5 MHz (the band limit width of the digital Q signal $C_Q$). The digital filter 208 operates with the driving clock frequency $2f_{sc}$. In this case, while the cut-off frequency $f_c$ thereof is 0.5 MHz, the drive clock frequency $f_s$ is given as $2f_{sc}$, so that the normalized cut-off frequency ratio $f_c/f_s$ is not so much reduced, and the digital filter 208 can be constructed relatively easily. In other words, it is easier to filter the digital Q signal $C_Q$ of the $2f_{sc}$ series than to filter the digital Q signal $C_Q$ having the series rate of $4f_{sc}$, because 0.5 MHz/4 MHz is less than 0.5 MHz/2 MHz. In this case, the Q-digital filter 208 is arranged to have a characteristic like that of the I-digital filter 203 to pass the digital Q signal $C_Q$.

The digital Q signal $C_Q$ produced from the digital filter 208 and of which the band width is limited as shown in Figure 9H is supplied through a level shifter 209 to one input of an adder 210. The level shifter 209 adjusts the level of the digital Q signal $C_Q$ to compensate for loss in transmission.

To the other input of the adder 210, there is supplied a DC signal $E_{DCQ}$ with a predetermined level at a predetermined position of the back porch of the horizontal synchronizing signal $C_Y$ added to the digital luminance signal $C_Y$. Then, the adder 210 provides a digital Q signal $\beta C_Q$ in which the DC signal $E_{DCQ}$ is added to the digital Q signal $C_Q$, which is then supplied to the multiplexer 206. In this case, there is provided a DC adder 210' at the output side of the other level shifter 205, whereby a DC voltage $E_{DCI}$ is added to the digital I signal $C_I$. Accordingly, the outputs of the adders 210 and 210' are multiplexed with one other in the multiplexer 206, by which a burst signal of a burst axis, that is, the $-(R-Y)$ axis is formed from the I and Q-axis signal components.

The multiplexer 206 is supplied as its control signal with the pulse signal $P_1$ as shown in Figure 10C. When this pulse signal $P_1$ becomes high level "1", a signal is extracted in the multiplexer 206 from the dot-sequential digital colour difference signal $\alpha (C_I/C_Q)$ supplied from the level shifting circuit 205. That is, the signal $\alpha C_I$ is extracted therethrough. Whereas, when the pulse signal $P_1$ becomes low level "0", the digital Q signal $\beta C_Q$ supplied from the adder 210 is extracted in the multiplexer 206 therethrough. Accordingly, the multiplexer 206 produces a dot-sequential digital colour difference signal $\alpha C_I/\beta C_Q$ by alternately extracting the digital I and Q signals $\alpha C_I$ and $\beta C_Q$ at every $1/4f_{sc}$ as shown in Figure 10F.

In this case, the DC signal $E_{DCQ}$ added in the adder 210 to the digital Q signal $\beta C_Q$ for generating the colour burst signal is converted to the pulse signal with the frequency $2f_{sc}$.

Also, the dot-sequential colour difference signal $\alpha C_I/\beta C_Q$ is supplied to a modulation multiplier 211. This multiplier 211 is supplied with a carrier $P_C$ with a frequency $f_{sc}$ whose first half becomes $+1$ and second half becomes $-1$ as shown in Figure 10G so as to carry out the multiplication. After all, the multiplier 211 produces a digital colour difference signal $\alpha \vec{C_I}+\beta \vec{C_Q}$ which is orthogonally two-phase modulated as shown in Figure 10H.

In this case, the pulse signal whose frequency is converted to $2f_{sc}$ in the multiplexer 206 is supplied to and multiplied with the carrier $P_C$ in the multiplier 211, whereby it is converted to a colour burst signal with the frequency $f_{sc}$.

The digital modulated colour difference signal $\alpha \overrightarrow{C_I} + \beta \overrightarrow{C_Q}$ derived from the multiplier 211 is supplied to the other input of the adder 10. In the adder 10, the digital luminance signal $C_Y$ is added to the digital modulated colour difference signal $\alpha \overrightarrow{C_I}$ and $\beta \overrightarrow{C_Q}$ so as to form a digital television signal. Thus, the digital television signal is produced at an output terminal 20 at the output side of the adder 10.

With the embodiment of Figure 8, it is possible to achieve the same functions and effects as those of the embodiment of Figure 1.

**Claims**

1. A digital colour camera comprising:
means (2R, 2B, 2G) for generating first, second and third digital colour signals, each with a sample rate of $4f_{sc}$ (where $f_{sc}$ represents a colour sub-carrier frequency) from outputs of first, second and third imagers;
means (5) for forming a digital luminance signal from said first, second and third digital colour signals;
means (12, 13) for forming a dot-sequential colour difference signal in which first and second digital colour difference signals appear alternately at every $1/4f_{sc}$ from said first, second and third digital colour signals; and
means for passing said dot-sequential colour difference signal through digital filter means (14) so as to limit the band widths of said first and second digital colour difference signals.

2. A camera according to claim 1 wherein the frequency of a clock signal supplied to said means (12) for forming a dot-sequential colour difference signal is $2f_{sc}$.

3. A camera according to claim 2 wherein in the signal paths of said first and second digital colour signals and upstream of said means (12) for forming a dot-sequential colour difference signal are provided respective pre-filter means (11R, 11B) for eliminating aliasing noise.

4. A camera according to claim 1 wherein said first, second and third imagers are respective solid state colour imagers and produce respectively digital colour signals, each with a signal clock rate of $4f_{sc}$.

5. A camera according to claim 4 wherein said first, second and third solid state colour imagers (100R, 100B and 100G) have sensing elements of discrete type and said sensing elements are arranged in a spatially off-setting relation to one another (Figure 6A).

6. A camera according to claim 5 wherein said first, second and third solid state colour imagers (100R, 100B, 100G) are respective charge coupled devices.

7. A camera according to claim 6 wherein each said charge coupled devices (100R, 100B, 100G) is driven by a clock drive pulse of frequency $2f_{sc}$ so as to produce an output, which is converted to a digital colour signal with a clock rate of $4f_{sc}$ by a digital interpolator (101R, 101B, 101G).

8. A digital colour camera comprising:
means (2R, 2B, 2G) for generating first, second and third digital colour signals, each with a sample rate of $4f_{sc}$ (where $f_{sc}$ represents a colour sub-carrier frequency) from outputs of imagers;
means (200) for forming a digital luminance signal from said first, second and third digital colour signals;
means (200) for forming first and second digital colour difference signals from said first, second and third digital colour signals;
pre-filter means (201I, 201Q) for limiting the band widths of said first and second digital colour difference signals;
means (202) for generating a dot-sequential digital colour difference signal where said first and second digital colour difference signals appear at every $1/4f_{sc}$ from said first and second digital colour difference signals whose band widths have been limited; and
means for passing said dot-sequential digital colour difference signal through digital filter means (203, 208) so as to limit the band widths of said first and second digital colour difference signals.

9. A digital colour camera comprising:
means (2R, 2B, 2G) for generating first, second and third digital colour signals, each with a sample rate of $4f_{sc}$ (where $f_{sc}$ represents a colour sub-carrier frequency) from outputs of imagers;
means (200) for forming a digital luminance signal and first and second digital colour difference signals from said first, second and third digital colour signals;
means (202) for generating a dot-sequential digital colour difference signal in which said first and second digital colour difference signals appear alternately every $1/4f_{sc}$;
first digital filter means (203) supplied with said dot-sequential digital colour difference signal so as to limit the band width of said first digital colour difference signal; and
second digital filter means (208) having a narrower pass band compared with said first digital filter (203) and supplied with said dot-sequential digital colour difference signal whose band is limited already so as to limit the band width of said second colour difference signal.

**Patentansprüche**

1. Digitale Farbkamera mit
Mitteln (2R, 2B, 2G) zum Erzeugen erster, zweiter und dritter digitaler Farbsignale aus Ausgangssignalen von ersten, zweiten und dritten Bildsensoren, wobei jedes dieser Mittel mit einer Abtastrate von $4f_{sc}$ ($f_{sc}$ repräsentiert eine Farbhilfsträgerfrequenz) arbeitet,

einem Mittel (5) zum Bilden eines digitalen Leuchtdichtesignals aus den ersten, zweiten und dritten digitalen Farbsignalen,

Mitteln (12, 13) zum Bilden eines digitalen Punktfolge-Farbdifferenzsignals, in dem erste und zweite digitale Farbdifferenzsignale abwechselnd bei jedem $1/4f_{sc}$ der ersten, zweiten und dritten digitalen Farbsignale auftreten, und

Mitteln zum Übertragen des digitalen Punktfolge-Farbdifferenzsignals durch ein digitales Filter (14), um auf diese Weise die Bandbreiten der ersten und zweiten digitalen Farbdifferenzsignale zu begrenzen.

2. Kamera nach Anspruch 1, bei der die Frequenz eines Taktsignals, das dem Mittel (12) zum Bilden eines Punktfolge-Farbdifferenzsignals zugeführt wird, $2f_{sc}$ beträgt.

3. Kamera nach Anspruch 2, bei der die Signalwege der ersten und zweiten digitalen Farbsignal und in Übertragungsrichtung vor dem Mittel (12) zum Bilden eines Punktfolge-Farbdifferenzsignals jeweils mit Vorfiltern (11R, 11B) zum Beseitigen von verdeckendem Rauschen versehen sind.

4. Kamera nach Anspruch 1, bei der die ersten, zweiten und dritten Bildsensoren jeweils Festkörper-Farbbildsensoren sind und entsprechende digitale Farbsignale jeweils mit einer Signaltaktfrequenz von $4f_{sc}$ erzeugen.

5. Kamera nach Anspruch 4, bei der die ersten, zweiten und dritten Festkörper-Farbbildsensoren (100R, 100B u. 100G) diskrete Sensorelemente haben und diese Sensorelemente in bezug aufeinander räumlich versetzt angeordnet sind (Fig. 6A).

6. Kamera nach Anspruch 5, bei der die ersten, zweiten und dritten Festkörper-Farbbildsensoren (100R, 100B, 100G) jeweils ladungsgekoppelte Einrichtungen sind.

7. Kamera nach Anspruch 6, bei der die ladungsgekoppelten Einrichtungen (100R, 100B, 100G) durch einen Treibertaktimpuls der Frequenz $2f_{sc}$ getrieben werden, um auf diese Weise ein Ausgangssignal zu erzeugen, das mit einer Taktfrequenz von $4f_{sc}$ durch einen digitalen Interpolator (101R, 101B, 101G) in ein digitales Farbsignal umgesetzt wird.

8. Digitale Farbkamera mit

Mitteln (2R, 2B, 2G) zum Erzeugen erste, zweiter und dritter digitaler Farbsignale aus Ausgangssignalen von Bildsensoren, wobei jedes dieser Mittel mit einer Abtastrate von $4f_{sc}$ ($f_{sc}$ repräsentiert eine Farbhilfsträgerfrequenz) arbeitet,

einem Mittel (200) zum Bilden eines digitalen Leuchtdichtesignals aus den ersten, zweiten und dritten digitalen Farbsignalen,

dem Mittel (200) zum Bilden von ersten und zweiten digitalen Farbdifferenzsignalen aus den ersten, zweiten und dritten digitalen Farbsignalen,

Vorfiltern (201I, 201Q) zum Begrenzen der Bandbreiten der ersten und zweiten digitalen Farbdifferenzsignale,

einem Mittel (202) zum Erzeugen eines digitalen Punktfolge-Farbdifferenzsignals, wobei die ersten und zweiten digitalen Farbdifferenzsignale bei jedem $1/4f_{sc}$ des ersten und des zweiten digitalen Farbdifferenzsignals, deren Bandbreiten begrenzt worden sind, auftreten, und

Mitteln zum Übertragen des digitalen Punktfolge-Farbdifferenzsignals durch digitale Filter (203, 208), um auf diese Weise die Bandbreiten der ersten und zweiten digitalen Farbdifferenzsignale zu begrenzen.

9. Digitale Farbkamera mit

Mitteln (2R, 2B, 2G) zum Erzeugen erster, zweiter und dritter digitaler Farbsignale aus Ausgangssignalen von Bildsensoren, wobei jedes dieser Mittel mit einer Abtastrate von $4f_{sc}$ ($f_{sc}$ repräsentiert eine Farbhilfsträgerfrequenz) arbeitet,

einem Mittel (200) zum Bilden eines digitalen Leuchtdichtesignals und von ersten und zweiten digitalen Farbdifferenzsignalen aus den ersten, zweiten und dritten digitalen Farbsignalen,

einem Mittel (202) zum Erzeugen eines digitalen Punktfolge-Farbdifferenzsignals, in dem die ersten und zweiten digitalen Farbdifferenzsignale abwechselnd bei jedem $1/4f_{sc}$ auftreten,

einem ersten digitalen Filter (203), dem das digitale Punktfolge-Farbdifferenzsignal zugeführt wird, um auf diese Weise die Bandbreite des ersten digitalen Farbdifferenzsignals zu begrenzen, und

einem zweiten digitalen Filter (208), das im Vergleich mit dem ersten digitalen Filter (203) einen engeren Durchlaßbereich hat und dem das digitale Farbdifferenzsignal zugeführt wird, dessen Bandbreite bereits begrenzt ist, um auf diese Weise die Bandbreite des zweiten Farbdifferenzsignals zu begrenzen.

**Revendications**

1. Caméra numérique de couleur, comprenant:

des moyens (2R, 2B, 2G) pour engendrer des premier, deuxième et troisième signaux numériques de chrominance, avec chacun une fréquence d'échantillonnage $4f_{sc}$ (où $f_{sc}$ représente une fréquence de sous-porteuse de chrominance) à partir des signaux de sortie de premier, deuxième et troisième dispositifs de prise d'images ou imageurs;

un moyen (5) pour former un signal numérique de luminance à partir des premier, deuxième et troisième signaux numériques de chrominance;

un moyen (12, 13) pour former un signal de différence de chrominance de points séquentiels dans lequel apparaissent alternativement des premier et second signaux numériques de différence de chrominance à chaque intervalle $1/4f_{sc}$ à partir des premier, deuxième et troisième signaux numériques de chrominance; et

un moyen pour faire passer le signal numérique de différence de chrominance de points séquentiels dans un moyen de filtrage numérique (14) de manière à limiter les largeurs de bande des premier et second signaux numériques de différence de chrominance.

2. Caméra selon la revendication 1, dans laquelle la fréquence d'un signal d'horloge fourni au moyen (12) pour former un signal de différence de chrominance de points séquentiels est égale à $2f_{sc}$.

3. Caméra selon la revendication 2, dans laquelle sont prévus des moyens de préfiltrage respectifs (11R, 11B) dans les chemins de signaux des premier et second signaux numériques de chrominance et en amont du moyen (12) pour former un signal de différence de chrominance de points séquentiels, pour éliminer le bruit de crénelage.

4. Caméra selon la revendication 1, dans laquelle les premier, deuxième et troisième imageurs sont des imageurs à l'état solide de couleurs respectives et qui produisent respectivement des signaux numériques de chrominance, chacun avec une fréquence de signaux d'horloge $4f_{sc}$.

5. Caméra selon la revendication 4, dans laquelle les premier, deuxième et troisième imageurs à l'état solide de couleurs (100R, 100B et 100G) comportent des éléments capteurs d'un type discret, les éléments capteurs étant disposés entre eux dans un rapport de compensation spatiale (Figure 6A).

6. Caméra selon la revendication 5, dans laquelle les premier, deuxième et troisième imageurs à l'état solide de couleurs (100R, 100B et 100G) sont des dispositifs à transfert de charges respectifs.

7. Caméra selon la revendication 6, dans laquelle chaque dispositif à transfert de charges (100R, 100B, 100G) est commandé par une impulsion d'horloge de commande de fréquence $2f_{sc}$ de manière à produire un signal de sortie, qui est converti en un signal numérique de chrominance de fréquence de signaux d'horloge $4f_{sc}$ au moyen d'un dispositif d'interpolation numérique (101R, 101B, 101G).

8. Caméra numérique de couleur, comprenant:
des moyens (2R, 2B, 2G) pour engendrer des premier, deuxième et troisième signaux numériques de chrominance, chacun avec une fréquence d'échantillonnage $4f_{sc}$ (où $f_{sc}$ représente une fréquence de sous-porteuse de chrominance) à partir des signaux de sortie de dispositifs de prise d'images ou imageurs;
un moyen (200) pour former un signal numérique de luminance à partir des premier, deuxième et troisième signaux numériques de chrominance;
un moyen (200) pour former des premier et second signaux numérique de différence de chrominance à partir des premier, deuxième et troisième signaux numériques de chrominance;
des moyens de préfiltrage (201I, 201Q) pour limiter les largeurs de bande des premier et second signaux numériques de différence de chrominance;
un moyen (202) pour engendrer un signal numérique de différence de chrominance de points séquentiels, dans lequel les premier et second signaux numériques de différence de chrominance apparaissent à chaque intervalle $1/4f_{sc}$ à partir des premier et second signaux numériques de différence de chrominance dont les largeurs de bande ont été limitées; et
un moyen pour faire passer le signal numérique de différence de chrominance de points séquentiels dans des moyens de filtrage numériques (203, 208) de manière à limiter les largeurs de bande des premier et second signaux numériques de différence de chrominance.

9. Caméra numérique de couleur, comprenant:
des moyens (2R, 2B, 2G) pour engendrer des premier, deuxième et troisième signaux numériques de chrominance, chacun avec une fréquence d'échantillonnage $4f_{sc}$ (où $f_{sc}$ représente une fréquence de sous-porteuse de chrominance) à partir des signaux de sortie de dispositifs de prise d'images ou imageurs;
un moyen (200) pour former un signal numérique de luminance et des premier et second signaux numériques de différence de chrominance à partir des premier, deuxième et troisième signaux numériques de chrominance;
un moyen (202) pour engendrer un signal numérique de différence de chrominance de points séquentiels dans lequel les premier et second signaux numériques de différence de chrominance apparaissent alternativement à chaque intervalle $1/4f_{sc}$;
un premier moyen de filtrage numérique (203) recevant le signal numérique de différence de chrominance de points séquentiels de manière à limiter la largeur de bande du premier signal numérique de différence de chrominance; et
un second moyen de filtrage numérique (208) ayant une bande passante plus étroite que le premier filtre numérique (203) et recevant le signal numérique de différence de chrominance de points séquentiels dont la bande est déjà limitée de manière à limiter la largeur de bande du second signal de différence de chrominance.

FIG.1

# FIG.2A.

# FIG.2B.

# FIG.2C.

# FIG.2D.

# FIG.2E.

FIG.3A. $(c_R)$

FIG.3B. $(c_R)$ ... $(c_B)$

FIG.3C. $(c_B)$ ... $(P_1)$ "1" "0"

FIG.3D. $(^{c_R}/c_B)$

FIG.3E. $(c_Y)$

FIG.3F. $(^{c_R-c_Y}/_{c_B-c_Y})$

FIG.3G. $(^{c_V}/c_U)$

FIG.3H. $(P_C)$ +1 0 −1

FIG.3I. $(\overrightarrow{c_V}+\overrightarrow{c_U})$

$1/4f_{sc}$  $1/2f_{sc}$

3

FIG.4.

0 068 811

FIG. 5

0 068 811

FIG. 6A.

FIG. 6B.

FIG. 7

FIG. 8

0 068 811

FIG.9A. Level $C_I, C_Q$

0   $f_{sc}$   $2f_{sc}$   $3f_{sc}$   $4f_{sc}$   $5f_{sc}$   $6f_{sc}$   Frequency

FIG.9B.

0   $f_{sc}$   $2f_{sc}$   $3f_{sc}$   $4f_{sc}$   $5f_{sc}$   $6f_{sc}$

FIG.9C. $C_I, C_Q$

0   $f_{sc}$   $2f_{sc}$   $3f_{sc}$   $4f_{sc}$   $5f_{sc}$   $6f_{sc}$

FIG.9D. $C_I, C_Q$

0   $f_{sc}$   $2f_{sc}$   $3f_{sc}$   $4f_{sc}$   $5f_{sc}$   $6f_{sc}$

FIG.9E.

0   $f_{sc}$   $2f_{sc}$   $3f_{sc}$   $4f_{sc}$   $5f_{sc}$   $6f_{sc}$

FIG.9F. 1.5MHz   $C_I, C_Q$

0   $f_{sc}$   $2f_{sc}$   $3f_{sc}$   $4f_{sc}$   $5f_{sc}$   $6f_{sc}$

FIG.9G.

0   $f_{sc}$   $2f_{sc}$   $3f_{sc}$   $4f_{sc}$   $5f_{sc}$   $6f_{sc}$

FIG.9H. 0.5MHz   $C_Q$

0   $f_{sc}$   $2f_{sc}$   $3f_{sc}$   $4f_{sc}$   $5f_{sc}$   $6f_{sc}$

FIG.10A. $(C_I)$

FIG.10B. $(C_Q)$

FIG.10C. $(P_1)$ "1" "0"

FIG.10D. $(C_I/C_Q)$

FIG.10E. $(C_Q)$

FIG.10F. $(\alpha C_I/\beta C_Q)$

FIG.10G. $(P_C)$ +1 0 -1

FIG.10H. $(\overrightarrow{\alpha C_I} + \overrightarrow{\beta C_Q})$